Europäisches Patentamt

European Patent Office

Office européen des brevets

(11) Publication number: **0 497 016 A1**

## EUROPEAN PATENT APPLICATION

(21) Application number: **91300275.4**

(22) Date of filing: **15.01.91**

(51) Int. Cl.5: **F16K 1/44**

(43) Date of publication of application:
**05.08.92 Bulletin 92/32**

(84) Designated Contracting States:
**AT BE CH DE DK ES FR GR IT LI LU NL SE**

(71) Applicant: **DAIRY PIPE LINES LIMITED**
**Shire Hill Industrial Estate**
**Saffron Walden, Essex CB11 3AX(GB)**

(72) Inventor: **Sutton, Alan**
**Shire Hill Industrial Estate**
**Saffron Walden, Essex CB11 3AX(GB)**

(74) Representative: **Nash, Keith Wilfrid et al**
**KEITH W. NASH & Co. Pearl Assurance**
**House 90-92 Regent Street**
**Cambridge CB2 1DP(GB)**

(54) **Valve unit.**

(57) A valve unit for permitting or preventing communication between two pipelines, wherein two coaxially arranged valve members (22, 24) are mounted for guided movement towards and away from a valve seat (12) having opposed seating surfaces against which the valve members are urged closed by the product pressures in the respective pipelines and cylinder/piston sub-assembly (40) is operative for simultaneously opening the valve at both seating surfaces in order to put the pipelines into communication.

EP 0 497 016 A1

## Field of the invention

This invention relates to a valve unit for permitting or preventing communication between two pipelines.

## Background to the invention

In various fields in which fluid products are conveyed along pipelines, there is sometimes a requirement to be able to mix or prevent mixing of the products. This requirement often exists, for example, in the dairy industry. The requirement can be satisfied by providing communication between two pipelines through an openable and closable valve, but problems with leakage, when mixing is not required, can be difficult to overcome, especially if, as is often the case, the fluid pressure in one pipeline is substantially higher than that in the other. It is an object of the present invention to provide a valve unit which is capable of providing a solution to this problem.

## The invention

According to the invention, there is provided a valve unit for permitting or preventing communication between two pipelines, comprising two valve members mounted for movement towards and away from one another on a valve axis, a valve seat having two opposed seating surfaces against which the valve members can close when moved towards one another, means whereby the valve members are each urged towards the closed position, and means for moving the valve members apart simultaneously to open the valve at both seating surfaces, thereby to put the two pipelines into communication.

The means whereby the valve members are urged towards the closed position may comprise a restoring spring acting on each valve member. Preferably, however, and possibly additionally, the valve members have valve heads having surfaces exposed to the pressure of the products in the respective pipelines, whereby said pressure in either one pipeline urges the corresponding valve member towards its closed position.

The valve members preferably also have valve stems which extend collinearly away from the valve heads in opposite directions along the valve axis, and are guided for movement along said axis.

The means for opening and closing the double valve may comprise two cylinder and piston arrangements acting on the respective valve stems. Pneumatic operation of the cylinder/piston arrangements may be controlled by an electric solenoid.

Microswitches may detect the positions of both valve members to enable an indication to be obtained of the condition of the valve.

The two cylinder/piston arrangements can be located on the same side (in the axial direction) of the valve member/valve seat assembly, preferably in an inner and outer coaxial sub-assembly. Thus, the piston of one arrangement may act on the valve stem of one valve member, which is of tubular form, to enable an actuating element driven by the piston of the other arrangement to extend through said tubular valve stem, and through the valve head, to act on the other valve member.

Said other valve member may also be tubular, with an apertured head communicating with a space or gap defined between the two valve heads when the valve is closed, thereby to allow any possible leakage past the valve seating surfaces to drain away.

The above-mentioned actuating element is preferably also tubular, and has communication with an inlet tube through which cleaning medium may be injected to spray the aforementioned space or gap between the valve heads, during a cleaning operation.

## Description of drawing

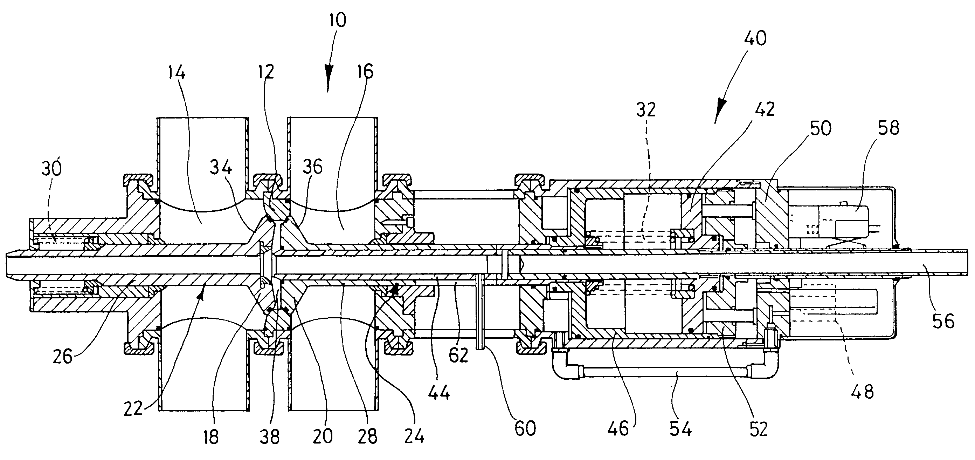

A valve unit in accordance with the invention is illustrated by way of example in the accompanying drawing, wherein the valve unit is shown in longitudinal axial cross-section.

## Description of embodiment

The illustrated valve unit comprises a valve housing generally referenced 10, containing an axially extending chamber divided by a valve seat 12 into left-hand and right-hand spaces 14, 16 which have branches for communicating with two pipelines, respectively. The valve seat 12 has opposed seating surfaces against which can close the valve heads 18, 20 of two valve members 22, 24, one for valve chamber space 14 and one for valve chamber space 16. Thus, by opening and closing this double valve, fluid products flowing in the two pipelines can be allowed to or be prevented from mixing.

The valve members 22, 24 also include tubular valve stems 26, 28, which extend axially in opposite directions away from the valve seat 12, projecting out of the valve housing proper into adjacent enclosures. Valve member 22 is urged to the right, towards its closed position, by restoring spring 30, whilst valve member 24 is urged to the left, towards its closed position, by restoring spring 32. Additionally, it is to be noted that the valve heads 18, 20 have annular rear surfaces 34, 36 exposed to product pressure in the respective pipelines, so that this pressure also tends to urge both valve members closed against the valve seat.

A small gap 38 exists between the valve heads of the closed valve members (the condition shown in the drawing).

To the right of the valve housing, the valve unit includes a sub-assembly, generally referenced 40, comprising coaxially disposed inner and outer cylinder and piston arrangements. The piston 42 of the inner cylinder/piston arrangement is connected to an actuating element 44 which extends axially to the left through the tubular valve stem 28 of valve member 24 and through an aperture in valve head 20 to engage valve member 22. Thus, when the piston 42 is pneumatically driven to the left, valve member 22 is opened. The piston 46 of the outer cylinder/piston arrangement is connected to valve stem 28 of valve member 24, whereby this valve member is opened when the piston 46 is pneumatically driven to the right.

Pneumatic operation of the two pistons is controlled by a solenoid valve 48, piston 42 being driven by air supplied through ports in parts 50 and 52, and piston 46 being driven by air supplied through connecting pipe 54. Exhaust air is bled away through a port connecting to the inner bore of tubular spindle 56. Thus, when solenoid valve 48 is operated, the valve members 22, 24 are simultaneously opened to allow product mixing.

Four microswitches, one being shown at 58, are positioned at different radial positions around the spindle 56 and tubular part 52, to sense the axial positions of the valve members and provide an indication of the state of the valve.

Actuating element 44 extending through valve stem 28 is also tubular, and communicates with a small radial inlet pipe 60, to enable a cleaning medium to be injected for spraying the gap 38 between the valve heads during a clean-in-place cleaning operation. As valve stem 28 and actuating element 44 are relatively movable, a longitudinal slot 62 is provided in the valve stem to accommodate the radial inlet pipe 60. When the valve gap 38 is cleaned, the cleaning medium drains away through the valve stem 26. This vent also enables any small product leakage across either valve seating surface to drain away. The aforesaid vent is closed to product pressure, during opening of the valve, by the action of actuating element 44 against the seal embodied within the valve head 18.

Various modifications of the above-described and illustrated arrangement are possible within the scope of the invention.

## Claims

1. A valve unit for permitting or preventing communication between two pipelines, characteris-ed by two valve members (18, 20) mounted for movement towards and away from one another on a valve axis, a valve seat (12) having two opposed seating surfaces against which the respective valve members can close when moved towards one another, spring means (30, 32) whereby the valve members are each urged towards their closed position, cylinder and piston means (40, 42, 46) acting on the respective valve members for lifting the two valve members (18, 20) from their respective seats in the valve seat (12), the two cylinder and piston arrangements being arranged as coaxial sub-assemblies on the same side, in the axial direction, of the valve seat (12), and means (48) controlling the supply of fluid to the cylinder and piston means.

2. A valve unit according to claim 1, wherein the valve members (18, 20) have valve heads having surfaces (34, 36) exposed to the pressure of the products in the respective pipelines, whereby said pressure in either one pipeline urges the corresponding valve member towards its closed position.

3. A valve unit according to claim 2, wherein the valve members have valve stems (26, 28) which extend collinearly away from the valve heads in opposite directions along the valve axis, and are guided for movement along said axis.

4. A valve unit according to any of claims 1 to 3, wherein pneumatic operation of the cylinder/piston arrangements is controlled by an electric solenoid (48).

5. A valve unit according to any of claims 1 to 4, wherein the piston (46) of one cylinder/piston arrangement acts on the valve stem (28) of valve member (24), which is of tubular form, to enable an actuating element (44) driven by the piston (42) of the other arrangement to extend through said tubular valve stem, and through the valve head, to act on the other valve member (22).

6. A valve unit according to claim 5, wherein valve member (22) is also tubular, with an apertured head communicating with a space or gap defined between the two valve heads when the valve is closed, thereby to allow any leakage past the valve seating surfaces to drain away.

7. A valve unit according to claim 5 or claim 6, wherein the actuating element (44) is also tubular, and communicates with an inlet tube (60) through which cleaning medium may be injected to wash the gap between the valve heads, during a cleaning operation.

8. A valve unit according to any of claims 1 to 7, including microswitches [such as (58)]for detecting the positions of both valve members to enable an indication to be obtained of the condition of the valve.

European Patent Office

EUROPEAN SEARCH REPORT

Application Number

EP 91 30 0275

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | DE-C- 856 084 (GERDTS) <br> * Page 2, line 97 - page 3, line 5 * <br> --- | 1,2,5 | F 16 K 1/44 |
| A | EP-A-0 098 418 (HANDTMANN) <br> * Page 13, line 12 - page 15, line 27 * <br> ----- | 1,3,6,7 | |

**TECHNICAL FIELDS SEARCHED (Int. Cl.5)**

F 16 K

The present search report has been drawn up for all claims

| Place of search | Date of completion of the search | Examiner |
|---|---|---|
| THE HAGUE | 04-09-1991 | VERELST P.E.J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................
& : member of the same patent family, corresponding
    document

EPO FORM 1503 03.82 (P0401)